# EUROPÄISCHE PATENTSCHRIFT

(11) **EP 3 806 292 B1**
(45) Veröffentlichungstag und Bekanntmachung des Hinweises auf die Patenterteilung: **20.12.2023**
(21) Anmeldenummer: 20190487.7
(22) Anmeldetag: 11.08.2020
(51) Int. Cl.: H02K 7/00, H02K 5/128

(54) **ELEKTRISCHE ANTRIEBSMASCHINE FÜR EINEN VERDICHTER UND/ODER EINE TURBINE, TURBOLADER UND/ODER TURBINE**
ELECTRIC DRIVE MACHINE FOR A COMPRESSOR AND/OR A TURBINE, TURBOCHARGER AND/OR TURBINE
MOTEUR ÉLECTRIQUE POUR UN COMPRESSEUR ET/OU UNE TURBINE, TURBOCOMPRESSEUR ET/OU TURBINE

(30) Priorität: 07.10.2019 DE 102019215342
(43) Veröffentlichungstag der Anmeldung: 14.04.2021
(73) Patentinhaber: Robert Bosch GmbH, 70442 Stuttgart (DE)
(72) Erfinder: Baeuerle, Michael, 71735 Eberdingen (DE)

(56) Entgegenhaltungen:
- EP-A2- 1 416 123
- WO-A1-2018/202668
- DE-A1-102013 020 656
- DE-A1-102014 210 451
- FR-A1- 3 051 516

## Beschreibung

### Stand der Technik

Aus dem Stand der Technik sind verschiedene elektrische Antriebsmaschinen und Turbolader bekannt. So offenbart beispielsweise die DE 10 2014 210 451 A1 einen Turbolader mit einer integrierten elektrischen Antriebsmaschine. Turbolader, insbesondere Abgasturbolader, werden insbesondere im Kraftfahrzeugbau dazu genutzt, die Luftfüllung in Zylindern einer Brennkraftmaschine zu erhöhen, um die Leistung der Brennkraftmaschine zu steigern. Häufig werden dazu Abgasturbolader eingesetzt, die vom Abgasstrom der Brennkraftmaschine angetrieben werden.

Darüber hinaus ist es beispielsweise aus der WO 2018/ 202668 A1 bekannt, einen Turbolader elektromotorisch zu unterstützen, so dass unabhängig von einem Abgasstrom der Brennkraftmaschine angesaugte Frischluft verdichtet und der Brennkraftmaschine mit erhöhtem Ladedruck zugeführt werden kann. Auch eine Kombination beider Varianten ist bereits bekannt. Dabei wird ein Abgasturbolader mit einer elektrischen Antriebsmaschine versehen, um die Welle des Abgasturboladers, auf welcher ein Verdichterrad sowie ein Turbinenrad drehfest angeordnet sind, anzutreiben. Hierdurch kann beispielsweise der ansonsten zeitlich verzögerte Ladedruckaufbau maßgeblich beschleunigt werden.

Eine derartige elektrische Antriebsmaschine weist üblicherweise einen Stator, der zumindest eine mehrphasige Antriebswicklung zur Erzeugung eines Antriebsmagnetfelds aufweist, und einen Rotor auf. Der Rotor weist eine einen Permanentmagneten auf und wird drehfest auf der Welle des Abgasturboladers angeordnet. Der Stator verfügt üblicherweise über ein kreisringförmiges Statorjoch sowie radial nach innen von dem Statorjoch vorstehende Statorzähne, die in Umfangsrichtung gesehen beabstandet voneinander gleichmäßig verteilt angeordnet sind. Die Statorzähne sind üblicherweise von der mehrphasigen Antriebswicklung umwickelt, wobei durch Bestromen der Phasen der Antriebswicklung mittels einer dafür vorgesehenen Leistungselektronik das drehende Antriebsmagnetfeld erzeugt wird, durch welches der durch die Welle des Abgasturboladers drehbar gelagerte Rotor mit einem vorgebbaren Drehmoment angetrieben wird. Der Permanentmagnet des Rotors wirkt dabei mit dem drehenden Magnetfeld zusammen. Die Realisierung der elektromotorischen Unterstützung durch eine elektrische Antriebsmaschine hat den Vorteil, dass die motorische Unterstützung besonders bauraumsparend in den Turbolader integrierbar ist.

Trotz der Vorteile der aus dem Stand der Technik bekannten elektrischen Antriebsmaschinen bewirkten Vorteile beinhalten diese noch Verbesserungspotenzial. So ist bei herkömmlichen elektrischen Antriebsmaschinen die nutzbaren Kennfeldbreite des Verdichterkennfeld limitiert.

### Offenbarung der Erfindung

Es wird daher eine elektrische Antriebsmaschine vorgeschlagen, die die Nachteile bekannter elektrischer Antriebsmaschinen zumindest weitgehend vermeidet und die insbesondere ausgebildet ist, das immer noch in der nutzbaren Kennfeldbreite limitierte Verdichterkennfeld zu verbreitern. Speziell die Pumpgrenze limitiert den Verdichter bei Einsatz der elektrischen Maschine im möglichen Druckverhältnis. Dazu soll auf einen zusätzlichen Aktuator zum Variieren eines Anstellwinkels der Statorzähne verzichtet werden.

Eine erfindungsgemäße elektrische Antriebsmaschine für einen Verdichter und/oder eine Turbine, insbesondere für einen Abgasturbolader einer Brennkraftmaschine, umfasst einen Rotor. Der Rotor weist eine Rotorwelle und einen Permanentmagneten auf. Die Rotorwelle ist zum Befestigen an einer Welle des Verdichters und/oder der Turbine ausgebildet. Die Rotorwelle definiert eine Drehachse des Rotors. Die elektrische Antriebsmaschine umfasst weiterhin einen Stator, der zumindest eine mehrphasige Antriebswicklung zur Erzeugung eines Antriebsmagnetfelds aufweist. Der Stator weist ein Statorjoch und mehrere Statorzähne auf, wobei sich die Statorzähne in Richtung zu dem Rotor erstrecken. Die elektrische Antriebsmaschine umfasst weiterhin eine Innenhülse, die den Rotor umfangsseitig umgibt, und eine Außenhülse, die koaxial zu der Innenhülse angeordnet ist. Zwischen dem Statorjoch und dem Rotor ist ein Kanal ausgebildet ist, der einen Strömungsweg für ein durch die Antriebsmaschine strömendes Medium definiert. Die Statorzähne sind in einem vorbestimmten Anstellwinkel derart angeordnet, dass in dem strömenden Medium ein Drall erzeugt wird. In der Außenhülse ist zumindest teilweise mindestens ein Rezirkulationskanal ausgebildet. Der Rezirkulationskanal weist mindestens einen Auslass in den Kanal im Bereich der Statorzähne auf.

Erfindungsgemäß wird somit vorgeschlagen, die Statorzähne anzustellen Durch den Anstellwinkel der magnetisch wirksamen Statorzähne wird ein Vordrall der einströmenden Luft generiert. Weiterhin wird vorgeschlagen, die Rückführung bzw. die Wiedereinleitestelle des Rezirkulationskanals in den Bereich der angestellten Statorzähne zu positionieren. Das hat zur Folge, dass während der ohnehin schon vorteilhaften partiellen Rezirkulation die Vordrallwirkung (Mitdrall) der Statorzähne unterstützt wird, da der Luftstrom damit um den Rezirkulationsanteil erhöht wird, womit auch die axiale und tangentiale Strömungsgeschwindigkeit steigt.

Der Rezirkulationskanal kann mindestens einen Einlass aufweisen, wobei sich der Einlass bezüglich einer Hauptströmungsrichtung des Mediums in dem Kanal stromabwärts der Statorzähne befindet. Hierbei erfolgt somit eine Entnahme eines kleinen Teil-Luftstromes kurz nach der initialen Verdichtung und eine Rückführung stromauf bzw. innerhalb der Statorsektion, so dass die Drallwirkung infolge eines höheren Massendurchsatzes innerhalb der Statorsektion unterstützt wird.

Der Rezirkulationskanal kann mehrere konzentrisch angeordnete Ringspalte oder mehrere Bohrungen umfassen. Ein derartiges Design für den Rezirkulationskanal lässt sich einfach und genau realisieren.

Der mindestens eine Auslass kann derart angeordnet sein, dass er einer Unterdruckseite der Statorzähne zugewandt ist. Mit anderen Worten wird das zurückgeführte Medium im Bereich des Unterdrucks der Statorzähne wieder zugeführt. Dadurch kann das Ablösen der Hauptströmung auf der "Windschatten"-Seite der Statorzähne unterdrückt werden.

Der mindestens eine Auslass kann sich bezüglich einer Hauptströmungsrichtung des Mediums in dem Kanal unmittelbar stromaufwärts der Statorzähne befindet. Dies hat zur Folge, dass im oberen Luftdurchsatzbereich infolge eines zunehmenden Staudruckes die Strömungsrichtung im Rezirkulationskanal entgegengesetzt ausfällt, was zusätzlich die Stopfgrenze des Verdichters verbessert. Alternativ kann sich der mindestens eine Auslass bezüglich einer Hauptströmungsrichtung des Mediums in dem Kanal im Bereich eines anströmseitigen Endes der Statorzähne befinden. Dadurch mündet der Rezirkulationskanal unmittelbar am anströmseitigen Ende der Statorzähne, so dass diese mit dem gesamten Massenstrom der Luft durch den Rezirkulationskanal plus der Luft durch den Kanal angeströmt werden, was die Mitdrallwirkung verstärkt.

Die elektrische Antriebsmaschine kann weiterhin mehrere Auslässe umfassen, wobei die Auslässe derart angeordnet sind, dass mehr als die Hälfte eines Massenstroms des durch den Rezirkulationskanal strömenden Mediums einer Unterdruckseite der Statorzähne zuführbar ist. Somit erfolgt die Rückführung schwerpunktmäßig in den Unterdruckbereich der Statorzähne, um einerseits möglichst viel Rezirkulationsströmung zu generieren und andererseits das Ablösen der Haupt-Strömung auf der "Windschatten"-Seite der Statorzähne zu unterdrücken.

Die Mehrzahl der Auslässe der Unterdruckseite der Statorzähne zugewandt ist oder diejenigen Auslässe, die der Unterdruckseite der Statorzähne zugewandt sind, eine größere Querschnittsfläche als die übrigen Auslässe aufweisen, oder diejenigen Auslässe, die der Unterdruckseite der Statorzähne zugewandt sind, eine größere Summe an Querschnittsfläche als die übrigen Auslässe aufweisen. Unterschiedlich große Einleite-Bohrungen oder ungleiche Anzahl von Bohrungen bzw. unterschiedliche Einleitequerschnitte möglichen, viel Rezirkulationsströmung zu generieren und andererseits das Ablösen der Haupt-Strömung auf der "Windschatten"-Seite der Statorzähne zu unterdrücken.

Der Kanal kann den einzigen Strömungsweg für das Medium durch die Antriebsmaschine hindurch bilden. Dadurch wird das Strömungsverhalten durch den Kanal weiter dahingehend verbessert, so dass eine intensive Statorkühlung erfolgt und das Ablagern von Partikeln, insbesondere von magnetischen oder magnetisierbaren Partikeln, auf dem Rotor verhindert oder zumindest im Wesentlichen vermieden wird. Innenhülse und Außenhülse definieren dabei den einzigen für das Medium zur Verfügung stehenden Kanal, der durch den Stator hin durchgeführt und in Umfangsrichtung lediglich durch die Statorzähne unterbrochen wird, die sich jedoch bis zur oder bis in die Innenhülse erstrecken. Weil der Kanal nicht durch die Statorzahnspitzen bzw. de Statorzahnkopf, den Rotor oder die Statorwicklung selbst begrenzt ist, sondern durch die Außenhülse und die Innenhülse, die einen im Wesentlichen ringförmigen Strömungsweg auf Höhe der Statorzähne, zwischen der Statorwicklung beziehungsweise Antriebswicklung und den Statorzahnspitzen einschließen, wird eine strömungsoptimierte Oberfläche für die Führung des Mediums bereitgestellt, die ein besonders verlustarmes Hindurchströmen des Mediums durch die Antriebsmaschine hindurch ermöglicht, wobei außerdem die oben genannten Vorteile bezüglich der Ablagerung von Partikeln erreicht werden.

Bei einer Weiterbildung ist der Stator mehrteilig ausgebildet. So weist das Statorjoch mehrere miteinander verbundene Statorjochsegmente auf. Weiterhin ist jedes Statorjochsegment mit zumindest einem Statorzahn verbunden. Folglich ist der Stator in mehrere Statorsegmente aufgeteilt, wobei jedes Statorsegment ein Statorjochsegment aufweist, an welchem nur ein Statorzahn angeordnet oder ausgebildet ist. Dadurch lässt sich der Stator einfach aus mehreren Segmenten zusammenbauen, die fest miteinander verbunden werden können.

Der vorbestimmte Anstellwinkel weist erfindungsgemäß einen Betrag von 3° bis 20°, bevorzugt 5° bis 15° auf. Ein derartiger Anstellwinkel bewirkt einen besonders guten Vordrall.

Erfindungsgemäß wird weiterhin ein Verdichter und/oder Turbine, insbesondere Abgasturbolader, mit einem Gehäuse, einer in dem Gehäuse drehbar gelagerten Welle, auf welcher zumindest ein Verdichterrad oder Turbinenrad drehfest angeordnet ist, und mit einer elektrischen Antriebsmaschine nach einem der zuvor beschriebenen Ausbildungen auf, wobei die Rotorwelle an der Welle des Verdichters und/oder der Turbine befestigt ist. Der Verdichter weist Schaufeln auf. Bevorzugt ist für jede Schaufel ein Rezirkulationskanal vorgesehen. Mit anderen Worten wird die Anzahl an Rezirkulationskanälen der Anzahl an Schaufeln des Verdichterrads angepasst, so dass der Mitdralleffekt besonders gut verstärkt wird. Alternativ ist die Rotorwelle an der Welle des Verdichters befestigt ist, wobei das Verdichterrad mehrere Haupt-Schaufeln aufweist, wobei einer Anzahl von Haupt-Schaufeln des Verdichterrads bevorzugt eine ungleiche Anzahl von Statorzähnen gegenübersteht und bevorzugt zwischen jedem Statorzahn ein Rezirkulationskanal vorgesehen ist.

Unter einem Stator ist im Rahmen der vorliegenden Erfindung ein feststehendes Bauteil einer elektrischen Antriebsmaschine, wie beispielsweise einem Elektromotor, zu verstehen, das als gemeinsamer Kern für Induktionsspulen dient. Der Stator verfügt üblicherweise über ein kreisringförmiges Statorjoch sowie radial nach innen von dem Statorjoch vorstehende Statorzähne, die in Umfangsrichtung gesehen beabstandet voneinander gleichmäßig verteilt angeordnet sind. Die Statorzähne sind üblicherweise von einer mehrphasigen Antriebswicklung umwickelt, wobei durch Bestromen der Phasen der Antriebswicklung mittels einer dafür vorgesehenen Leistungselektronik das drehende Antriebsmagnetfeld erzeugt wird, durch welches der durch die Welle drehbar gelagerte Rotor mit einem vorgebbaren Drehmoment angetrieben wird.

Unter einem Rotor ist im Rahmen der vorliegenden Erfindung ein rotierendes Bauteil einer elektrischen Antriebsmaschine, wie beispielsweise einem Elektromotor, zu verstehen, das alternativ auch als Läufer bezeichnet wird. Der Rotor weist dabei zweckmäßigerweise zumindest einen Permanentmagneten auf, der mit dem drehenden Magnetfeld des Stators zusammenwirkt.

Unter der Hauptströmungsrichtung ist im Rahmen der vorliegenden Erfindung grundsätzlich ohne weitere Angabe die lokale Strömungsrichtung des fluiden Mediums am Ort des Kanals zu verstehen, wobei beispielsweise lokale Unregelmäßigkeiten, wie z. B. Turbulenzen unberücksichtigt bleiben können. Insbesondere kann unter der Hauptströmungsrichtung somit die lokale gemittelte Transportrichtung des strömenden fluiden Mediums am Ort des Kanals verstanden werden. Dabei bezieht sich die gemittelte Transportrichtung auf eine Transportrichtung, in der das fluide Medium im zeitlichen Mittel überwiegend strömt.

Unter einem Anstellwinkel ist im Rahmen der vorliegenden Erfindung der Winkel zwischen der Richtung eines anströmenden Fluids und der Sehne eines Profils zu verstehen. Das Profil bezieht sich dabei insbesondere auf das Profil eines Statorzahns. Als Profil wird dabei die Form des Querschnitts eines Körpers, d.h. des Statorzahns, in Strömungsrichtung bezeichnet. Unter der Profilsehne ist die gedachte Verbindungslinie zwischen der Profilnase und der Profilhinterkante zu verstehen.

Unter Profilierung ist im Rahmend er vorliegenden Erfindung das Vorsehen oder Ausbilden eines vorbestimmten Profils in einem Bauteil zu verstehen. Als Profil ist dabei die Form des Querschnitts eines Bauteils in Strömungsrichtung zu verstehen.

Unter Drall ist im Rahmen der vorliegenden Erfindung die physikalische Größe Drehimpuls zu verstehen.

Unter einer Ausbildung eines Auslasses des Rezirkulationskanals in den Kanal ist im Rahmen der vorliegenden Erfindung eine Position des Aulasses zu verstehen, die eine Zuführung des Mediums aus dem Rezirkulationskanal unmittelbar in Richtung der Statorzähne bzw. einen dazu angrenzenden Bereich erlaubt.

Ein Grundgedanke der vorliegenden Erfindung ist die Rückführung bzw. die Wiedereinleitestelle des Rezirkulationskanals in den Bereich der angestellten Statorzähne zu positionieren.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
Figur 1 eine Schnittansicht eines Turboladers mit einer elektrischen Antriebsmaschine gemäß einer Ausführungsform der vorliegenden Erfindung,
Figur 2 eine perspektivische Ansicht des Stators und des Rotors der elektrischen Antriebsmaschine,
Figur 3 eine schematische Schnittansicht des Turboladers mit Verlauf eines Rezirkulationskanals und
Figur 4 eine schematische Schnittansicht des Turboladers mit einer vereinfachten Darstellung der Strömungsrichtung in einem Rezirkulationskanal.

### Ausführungsformen der Erfindung

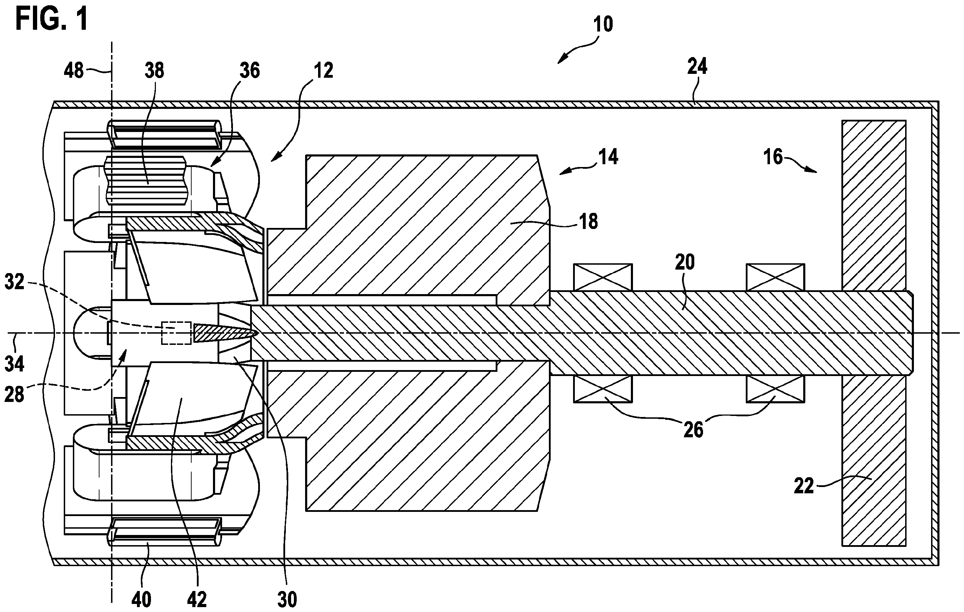

Figur 1 zeigt eine Längsschnittansicht eines Turboladers 10 mit einer elektrischen Antriebsmaschine 12 gemäß einer ersten Ausführungsform der vorliegenden Erfindung. Der Turbolader 10 ist als Abgasturbolader einer Brennkraftmaschine ausgebildet. Der Turbolader 10 weist einen Verdichter 14 sowie eine Turbine 16 auf. Der Verdichter 14 weist ein Verdichterrad 18 auf, das auf einer Welle 20 des Turboladers 10 drehfest angeordnet ist. Die Welle 20 ist selbst drehbar in einem Gehäuse 24 des Turboladers 10 gelagert. An einem von dem Verdichterrad 18 abgewandten Ende der Welle 20 ist außerdem ein Turbinenrad 22 der Turbine 16 drehfest mit der Welle 20 verbunden. Wenn das Turbinenrad 22 vom Abgas einer Brennkraftmaschine angeströmt und dadurch angetrieben wird, wird damit das Verdichterrad 18 ebenfalls in eine Drehbewegung versetzt, so dass dem Verdichterrad 18 zugeführte Frischluft verdichtet und der Brennkraftmaschine zugeführt wird.

Die drehbare Lagerung der Welle 20 in dem Gehäuse 24 kann auf unterschiedliche Arten realisiert werden. Beispielsweise ist vorgesehen, dass die Welle 20 durch wenigstens zwei Lager 26 in dem Gehäuse 24 drehbar gelagert ist. Vorzugsweise sind als Lager 26 zwei Spezialgleitlager vorhanden. Zur axialen Lagerung der Welle 20 kann auch vorgesehen sein, dass eines der Spezialgleitlager als Axialgleitlager ausgebildet ist. Alternativ ist vorgesehen, dass ein Lager als Magnetlager ausgebildet ist, und das andere Lager, das als Axiallager dient, als Wälzkörperlager.

Damit insbesondere der Verdichter 14 unabhängig vom Abgasstrom der Brennkraftmaschine antreibbar ist, so dass jederzeit eine hohe Zylinderluftfüllung in den Zylindern der Brennkraftmaschine erreicht werden kann, ist vorliegend außerdem vorgesehen, dass der Turbolader 10 eine elektrische Antriebsmaschine 12 aufweist. Die elektrische Antriebsmaschine 12 ist vorliegend dem Verdichter 14 zugeordnet bzw. grenzt an diesen an, wie nachstehend ausführliche beschrieben wird.

Die elektrische Antriebsmaschine 12 weist einen Rotor 28 auf. Der Rotor 28 weist eine Rotorwelle 30 und einen Permanentmagneten 32 auf. Die Rotorwelle 30 kann synonym auch als Rotorhülse bezeichnet werden. Der Permanentmagnet 32 ist in einer nicht näher dargestellten axialen Aufnahmevertiefung der Rotorwelle aufgenommen. Der Permanentmagnet 32 ist aus SmCo hergestellt. Die Rotorwelle 30 ist zum Befestigen an der Welle 20 des Verdichters 14 und/oder der Turbine 16 ausgebildet. Die Rotorwelle 30 definiert eine Drehachse 34 des Rotors 30.

Die elektrische Antriebsmaschine 12 weist weiterhin einen Stator 36 auf. Der Rotor 28 ist koaxial von dem Stator 36 umgeben. Der Stator 36 weist zumindest eine mehrphasige Antriebswicklung 38 zur Erzeugung eines Antriebsmagnetfelds auf. Der Stator 36 weist ein Statorjoch 40 und mehrere Statorzähne 42 auf. Das Statorjoch 40 ist kreisringförmig ausgebildet. Die Statorzähne 42 erstrecken sich in Richtung zu dem Rotor 28. Die Statorzähne 42 enden radial beabstandet zu dem Rotor 28, so dass zwischen den Statorzähnen 42 und dem Rotor 28 ein Luftspalt verbleibt. Der Stator 36 ist mehrteilig ausgebildet. Das Statorjoch 40 weist mehrere miteinander verbundene Statorjochsegmente 44 auf.

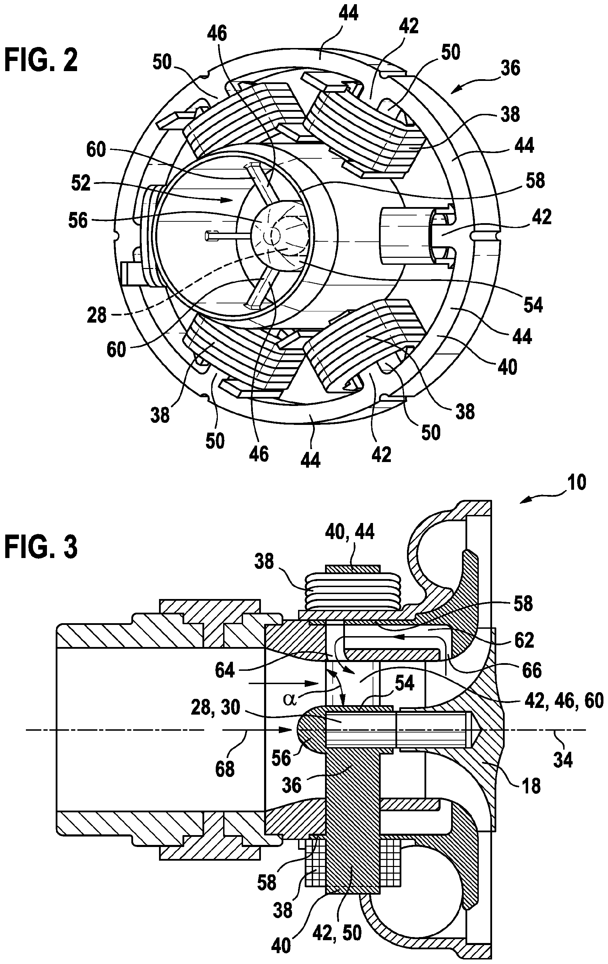

Figur 2 zeigt eine perspektivische Ansicht des Stators 36 und des Rotors 28 der elektrischen Antriebsmaschine 12. Jedes Statorjochsegment 44 ist mit zumindest einem Statorzahn 42 verbunden. Es wird explizit betont, dass das Statorjochsegment 44 und der Statorzahn 42 einstückig ausgebildet sein kann. Weiter kann der gesamte Stator 36 einstückig ausgebildet sein. Die Statorzähne 42 weisen jeweils zumindest einen Abschnitt 46 auf, der sich innerhalb einer Ebene 48 senkrecht zu der Drehachse 34 weiter innen in Richtung zu der Drehachse 34 als ein Antriebswicklungsabschnitt 50 der Statorzähne 42 befindet, wie nachstehend ausführlicher beschrieben wird. Der Antriebswicklungsabschnitt 50 befindet sich in der Ebene 48 gesehen, die senkrecht zu der Drehachse 34 ist, näher an dem Statorjoch 40 als der Abschnitt 46 Mit anderen Worten befindet sich der Antriebswicklungsabschnitt 50 weiter außen in radialer Richtung bezüglich der Drehachse 34 gesehen als der Abschnitt 46. Auf dem Antriebswicklungsabschnitt 50 ist die Antriebswicklung 38 angeordnet. Genauer kann die Antriebswicklung 38 als eine radial auf Antriebswicklungsabschnitt 50 aufgesteckte Wicklung bestehend aus mehreren Spulen ausgebildet sein, wobei auf jeden Antriebswicklungsabschnitt 50 der Statorzähne 42 wenigstens eine Spule aufgeschoben ist.

Der Stator 36 umgibt den Rotor 28 derart, dass zwischen dem Statorjoch 40 und dem Rotor 28 ein Spalt bzw. Kanal 52 ausgebildet ist, der einen Strömungsweg für ein durch die Antriebsmaschine 12 strömendes Medium definiert. Der Abschnitt 46 der Statorzähne 42 befindet sich in dem Kanal 52. Weiterhin umgibt eine Innenhülse 54 der Antriebsmaschine 12 den Rotor 28 umfangsseitig. Ein Innendurchmesser der Innenhülse 54 ist größer als der Rotor 28, so dass dieser in der Innenhülse 54 aufgenommen ist. Die Innenhülse 54 kann mit einer Abdeckkappe 56 verbunden oder einstückig ausgebildet sein. Die Abdeckkappe 56 ist bei bestimmungsgemäßem Gebrauch stromaufwärts des Rotors 28 angeordnet und der stromaufwärtigen Stirnseite des Rotors 28 zugeordnet beziehungsweise vorgeschaltet. Die Abdeckkappe 56 weist die Form eines halben Ovoids auf. Weiterhin ist eine Außenhülse 58 der Antriebsmaschine 12 koaxial zu der Innenhülse 54 angeordnet ist. Ein Außendurchmesser der Außenhülse 58 ist kleiner ist als der des Statorjochs 40, so dass zwischen der Außenhülse 58 und dem Statorjoch 40 die Antriebswicklung 38 anordenbar ist. So befindet sich die Außenhülse 58 in radialer Richtung gesehen am Übergang zwischen dem Abschnitt 46 und dem Antriebswicklungsabschnitt 50. Der Kanal 52 ist zwischen der Innenhülse 54 und der Außenhülse 58 ausgebildet. Der Kanal 52 bildet den einzigen Strömungsweg für das Medium durch die Antriebsmaschine 12 hindurch. Die Innenhülse 54 und die Außenhülse 58 sind mittels Haltestreben 60 verbunden, die von der Innenhülse 54 ausgehen und sich radial nach außen erstrecken. Korrespondierend zu den Statorzähnen 42 ist jeweils eine Haltestrebe 60 vorgesehen. Dabei sind die Haltestreben 60 entsprechend der Verteilung der Statorzähne 42 angeordnet, so dass in der Endmontageposition jede Haltestrebe 60 stromaufwärts eines Statorzahns 42 liegt. Die Haltestreben 60 können ein strömungsoptimiertes Profil aufweisen, um das Medium möglichst verlustarm an den Statorzähnen 42 vorbeizuführen. Der Permanentmagnet 32 ist ausgebildet, mittels eines Magnetfeldes, das über den Stator 36 induziert wird, den Turbolader 10 elektrisch anzutreiben. Es wird explizit betont, dass die Statorzähne 42 ein strömungsoptimiertes Profil aufweisen können. Dies kann beispielsweise vorgesehen werden, falls keine Innenhülse 54 und Außenhülse 58 mit Haltestreben 60 verwendet wird.

Figur 3 zeigt eine schematische Schnittansicht des Turboladers 10 mit Verlauf eines Rezirkulationskanals 62. So ist in der Außenhülse 58 zumindest teilweise mindestens ein Rezirkulationskanal 62 ausgebildet. Wie in Figur 3 gezeigt, weist der Rezirkulationskanal 62 mindestens einen Auslass 64 in den Kanal 52 im Bereich der Statorzähne 42 auf. Bei dem gezeigten Ausführungsbeispiel weist der Rezirkulationskanal 62 einen Auslass 64 auf. Der Auslass 64 befindet sich bezüglich der Hauptströmungsrichtung 68 des Mediums in dem Kanal 52 an dem anströmseitigen Ende der Statorzähne 42. Wie in Figur 3 weiterhin zu erkennen ist, weist der Rezirkulationskanal 62 weiterhin mindestens einen Einlass 66 auf, der von dem Kanal 52 abzweigt. Dabei befindet sich der Einlass 66 bezüglich der Hauptströmungsrichtung 68 des Mediums in dem Kanal 52 stromabwärts der Statorzähne 42. So befindet sich der Einlass 66 des Rezirkulationskanals 66 im Bereich der Schaufeln des Verdichterrads 18. Der Rezirkulationskanal 62 kann mehrere konzentrisch angeordnete Ringspalte umfassen. Alternativ oder zusätzlich kann der Rezirkulationskanal 62 mehrere Bohrungen umfassen. Der mindestens eine Auslass 64 ist derart angeordnet, dass er einer Unterdruckseite der Statorzähne 42 zugewandt ist. Bevorzugt sind mehrere Auslässe 64 vorgesehen, wobei die Auslässe 64 derart angeordnet sind, dass mehr als die Hälfte eines Massenstroms des durch den Rezirkulationskanal 62 strömenden Mediums einer Unterdruckseite der Statorzähne 42 zuführbar ist. Dies kann realisiert werden, indem die Mehrzahl der Auslässe 64 der Unterdruckseite der Statorzähne 42 zugewandt ist oder diejenigen Auslässe 64, die der Unterdruckseite der Statorzähne 42 zugewandt sind, eine größere Querschnittsfläche als die übrigen Auslässe aufweisen, oder diejenigen Auslässe 64, die der Unterdruckseite der Statorzähne 42 zugewandt sind, eine größere Summe an Querschnittsfläche als die übrigen Auslässe 64 aufweisen. Alternativ oder zusätzlich kann sich ein der mehrere Auslässe 64 bezüglich der Hauptströmungsrichtung 68 des Mediums in dem Kanal 52 unmittelbar stromaufwärts der Statorzähne 42 befinden. Das Vorhandensein von einem oder mehreren Rezirkulationskanälen 62 ist durch eine einfache Sichtprüfung möglich. Die Anzahl der Rezirkulationskanäle 66 kann der Anzahl der Schaufeln des Verdichterrads 18 angepasst sein. Beispielsweise ist jeder Schaufel ein Rezirkulationskanal 66 zugeordnet. Das Verdichterrad 18 kann mehrere Haupt-Schaufeln aufweisen, wobei einer Anzahl von Haupt-Schaufeln des Verdichterrads 18 bevorzugt eine ungleiche Anzahl von Statorzähnen 42 gegenübersteht und bevorzugt zwischen jedem Statorzahn 42 ein Rezirkulationskanal 62 vorgesehen ist.

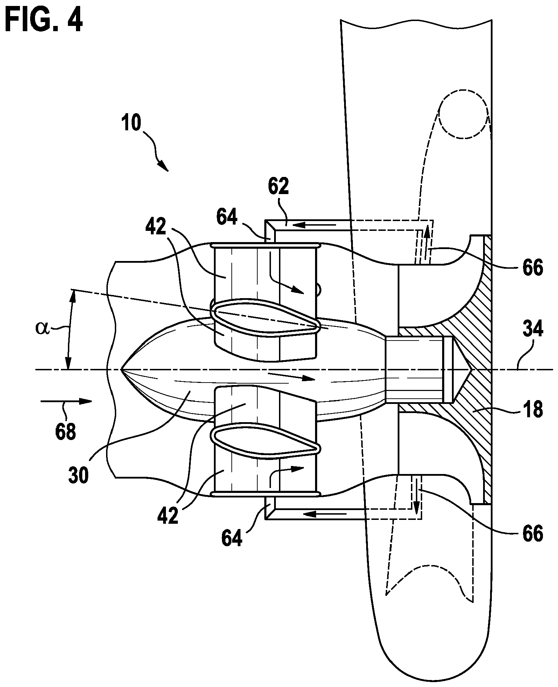

Figur 4 zeigt eine schematische Schnittansicht des Turboladers 10 mit einer vereinfachten Darstellung der Strömungsrichtung in einem Rezirkulationskanal 62. Die Strömungsrichtung in dem Rezirkulationskanal ist dabei durch Pfeile angegeben. Wie weiter in Figur 4 zu erkennen ist, sind die Statorzähne 42 in einem vorbestimmten Anstellwinkel α angeordnet. Der vorbestimmte Anstellwinkel α weist einen Betrag von 3° bis 20° und bevorzugt 5° bis 15° auf, beispielsweise 10°. Der Anstellwinkel ist dabei derart gewählt, dass in dem strömenden Medium ein Drall erzeugt wird. Zusätzlich kann durch eine entsprechende Profilierung der Statorzähne 42 bzw. der diese umgebenden Haltestreben 60 in dem strömenden Medium ein Drall erzeugt werden.

## Patentansprüche

1. Elektrische Antriebsmaschine (12) für einen Verdichter (14) und/oder eine Turbine (10), insbesondere für einen Abgasturbolader einer Brennkraftmaschine, umfassend
einen Rotor (28), wobei der Rotor (28) eine Rotorwelle (30) und einen Permanentmagneten (32) aufweist, wobei die Rotorwelle (30) zum Befestigen an einer Welle (20) des Verdichters (14) und/oder der Turbine (16) ausgebildet ist, wobei die Rotorwelle (30) eine Drehachse (34) des Rotors (28) definiert,
einen Stator (36), der zumindest eine mehrphasige Antriebswicklung (38) zur Erzeugung eines Antriebsmagnetfelds aufweist, wobei der Stator (36) ein Statorjoch (40) und mehrere Statorzähne (42) aufweist, wobei sich die Statorzähne (42) in Richtung zu dem Rotor (28) erstrecken,
eine Innenhülse (54), die den Rotor (28) umfangsseitig umgibt, und
eine Außenhülse (58), die koaxial zu der Innenhülse (54) angeordnet ist, wobei zwischen der Innenhülse (54) und der Außenhülse (58) ein Kanal (52) ausgebildet ist, der einen Strömungsweg für ein durch die Antriebsmaschine (12) strömendes Medium definiert, wobei sich die Statorzähne (42) bis zur der Innenhülse erstrecken,
**dadurch gekennzeichnet, dass**
die Statorzähne (42) in einem vorbestimmten Anstellwinkel (α) von 3° bis 20° zwischen der Richtung des anströmenden Fluids und der Sehne eines Profils der Statorzähne angeordnet sind, so dass in dem strömenden Medium ein Drall erzeugt wird, wobei in der Außenhülse (58) zumindest teilweise mindestens ein Rezirkulationskanal (62) ausgebildet ist, wobei der Rezirkulationskanal (62) mindestens einen Auslass (64) in den Kanal (52) im Bereich der Statorzähne (42) aufweist.

2. Elektrische Antriebsmaschine (12) nach Anspruch 1, wobei der Rezirkulationskanal (62) mindestens einen Einlass (66) aufweist, wobei sich der Einlass (66) bezüglich einer Hauptströmungsrichtung (68) des Mediums in dem Kanal (52) stromabwärts der Statorzähne (42) befindet.

3. Elektrische Antriebsmaschine (12) nach Anspruch 1 oder 2, wobei der Rezirkulationskanal (62) mehrere konzentrisch angeordnete Ringspalte oder mehrere Bohrungen umfasst.

4. Elektrische Antriebsmaschine (12) nach einem der vorhergehenden Ansprüche, wobei der mindestens eine Auslass (64) derart angeordnet ist, dass er einer Unterdruckseite der Statorzähne (42) zugewandt ist.

5. Elektrische Antriebsmaschine (12) nach einem der vorhergehenden Ansprüche, wobei sich der mindestens eine Auslass (64) bezüglich einer Hauptströmungsrichtung (68) des Mediums in dem Kanal (52) unmittelbar stromaufwärts der Statorzähne (42) oder im Bereich eines anströmseitigen Endes der Statorzähne (42) befindet.

6. Elektrische Antriebsmaschine (12) nach einem der vorhergehenden Ansprüche, weiterhin umfassend mehrere Auslässe (64), wobei die Auslässe (64) derart angeordnet sind, dass mehr als die Hälfte eines Massenstroms des durch den Rezirkulationskanal (62) strömenden Mediums einer Unterdruckseite der Statorzähne (42) zuführbar ist.

7. Elektrische Antriebsmaschine (12) nach dem vorhergehenden Anspruch, wobei die Mehrzahl der Auslässe (64) der Unterdruckseite der Statorzähne (42) zugewandt ist oder diejenigen Auslässe (64), die der Unterdruckseite der Statorzähne (42) zugewandt sind, eine größere Querschnittsfläche als die übrigen Auslässe (64) aufweisen, oder diejenigen Auslässe (64), die der Unterdruckseite der Statorzähne (42) zugewandt sind, eine größere Summe an Querschnittsfläche als die übrigen Auslässe (64) aufweisen.

8. Elektrische Antriebsmaschine (12) nach einem der vorhergehenden Ansprüche, wobei der Kanal (52) den einzigen Strömungsweg für das Medium durch die Antriebsmaschine (12) hindurch bildet.

9. Elektrische Antriebsmaschine (12) nach einem der vorhergehenden Ansprüche, wobei der vorbestimmte Anstellwinkel (α) einen Betrag von 5° bis 15° aufweist.

10. Verdichter (14) und/oder Turbine (16), insbesondere Abgasturbolader (10), mit einem Gehäuse (24), einer in dem Gehäuse (24) drehbar gelagerten Welle (20), auf welcher zumindest ein Verdichterrad (18) oder Turbinenrad (20) drehfest angeordnet ist, und mit einer elektrischen Antriebsmaschine (12) nach einem der vorhergehenden Ansprüche, wobei die Rotorwelle (30) an der Welle (20) des Verdichters (14) befestigt ist, wobei das Verdichterrad (18) mehrere Haupt-Schaufeln aufweist, wobei einer Anzahl von Haupt-Schaufeln des Verdichterrads (18) bevorzugt eine ungleiche Anzahl von Statorzähnen (42) gegenübersteht und bevorzugt zwischen jedem Statorzahn (42) ein Rezirkulationskanal (62) vorgesehen ist.

## Claims

1. Electric drive machine (12) for a compressor (14) and/or a turbine (10), in particular for an exhaust gas turbocharger of an internal combustion engine, comprising a rotor (28), the rotor (28) having a rotor shaft (30) and a permanent magnet (32), the rotor shaft (30) being configured for fastening to a shaft (20) of the compressor (14) and/or the turbine (16), the rotor shaft (30) defining a rotational axis (34) of the rotor (28), a stator (36) which has at least one multiphase drive winding (38) for generating a drive magnetic field, the stator (36) having a stator yoke (40) and a plurality of stator teeth (42), the stator teeth (42) extending in the direction of the rotor (28),
an inner sleeve (54) which surrounds the rotor (28) on the circumferential side, and
an outer sleeve (58) which is arranged coaxially with respect to the inner sleeve (54), a channel (52) being configured between the inner sleeve (54) and the outer sleeve (58), which channel (52) defines a flow path for a medium which flows through the drive machine (12), the stator teeth (42) extending as far as the inner sleeve, **characterized in that**
the stator teeth (42) are arranged at a predefined angle of attack (α) of from 3° to 20° between the direction of the inflowing fluid and the chord of a profile of the stator teeth, with the result that a swirl is generated in the flowing medium, at least one recirculation channel (62) being configured at least partially in the outer sleeve (58), the recirculation channel (62) having at least one outlet (64) into the channel (52) in the region of the stator teeth (42).

2. Electric drive machine (12) according to Claim 1, the recirculation channel (62) having at least one inlet (66), the inlet (66) being situated downstream of the stator teeth (42) with regard to a main flow direction (68) of the medium in the channel (52).

3. Electric drive machine (12) according to Claim 1 or 2, the recirculation channel (62) comprising a plurality of concentrically arranged annular gaps or a plurality of bores.

4. Electric drive machine (12) according to one of the preceding claims, the at least one outlet (64) being arranged in such a way that it faces a negative pressure side of the stator teeth (42).

5. Electric drive machine (12) according to one of the preceding claims, the at least one outlet (64) being situated immediately upstream of the stator teeth (42), with regard to a main flow direction (68) of the medium in the channel (52), or in the region of an incident flow-side end of the stator teeth (42).

6. Electric drive machine (12) according to one of the preceding claims, comprising, furthermore, a plurality of outlets (64), the outlets (64) being arranged in such a way that more than half of the mass flow of the medium which flows through the recirculation channel (62) can be fed to a negative pressure side of the stator teeth (42) .

7. Electric drive machine (12) according to the preceding claim, the plurality of outlets (64) facing the negative pressure side of the stator teeth (42), or those outlets (64) which face the negative pressure side of the stator teeth (42) having a greater cross-sectional area than the remaining outlets (64), or those outlets (64) which face the negative pressure side of the stator teeth (42) having a greater sum of cross-sectional area than the remaining outlets (64).

8. Electric drive machine (12) according to one of the preceding claims, the channel (52) forming the only flow path for the medium through the drive machine (12).

9. Electric drive machine (12) according to one of the preceding claims, the predefined angle of attack (α) having a magnitude of from 5° to 15°.

10. Compressor (14) and/or turbine (16), in particular exhaust gas turbocharger (10), with a housing (24), a shaft (20) which is mounted rotatably in the housing (24) and on which at least one compressor impeller (18) or turbine wheel (20) is arranged fixedly for conjoint rotation, and with an electric drive machine (12) according to one of the preceding claims, the rotor shaft (30) being fastened to the shaft (20) of the compressor (14), the compressor impeller (18) having a plurality of main blades, an unequal number of stator teeth (42) preferably lying opposite a number of main blades of the compressor impeller (18), and a recirculation channel (62) preferably being provided between each stator tooth (42) .

## Revendications

1. Machine électrique d'entraînement (12) pour un compresseur (14) et/ou une turbine (10), notamment pour un turbocompresseur à gaz d'échappement d'un moteur à combustion interne, comprenant un rotor (28), le rotor (28) présentant un arbre de rotor (30) et un aimant permanent (32), l'arbre de rotor (30) étant conçu pour être fixé à un arbre (20) du compresseur (14) et/ou de la turbine (16), l'arbre de rotor (30) définissant un axe de rotation (34) du rotor (28),
un stator (36) comprenant au moins un enroulement d'entraînement polyphasé (38) pour générer un champ magnétique d'entraînement, le stator (36) comprenant une culasse de stator (40) et une pluralité de dents de stator (42), les dents de stator (42) s'étendant en direction du rotor (28),
un manchon intérieur (54) qui entoure le rotor (28) sur sa circonférence, et
un manchon extérieur (58) agencé coaxialement au manchon intérieur (54), un canal (52) étant formé entre le manchon intérieur (54) et le manchon extérieur (58), lequel canal définit un trajet d'écoulement pour un fluide s'écoulant à travers la machine d'entraînement (12), les dents de stator (42) s'étendant jusqu'au manchon intérieur,
**caractérisée en ce que** les dents de stator (42) sont disposées selon un angle d'attaque prédéterminé (α) de 3° à 20° entre la direction du fluide entrant et la corde d'un profil des dents de stator, de sorte qu'un tourbillon est généré dans le fluide en écoulement, au moins un canal de recirculation (62) étant formé au moins partiellement dans le manchon extérieur (58), le canal de recirculation (62) présentant au moins une sortie (64) dans le canal (52) dans la zone des dents de stator (42).

2. Machine électrique d'entraînement (12) selon la revendication 1, dans laquelle le canal de recirculation (62) présente au moins une entrée (66), l'entrée (66) étant située en aval des dents de stator (42) par rapport à une direction principale d'écoulement (68) du fluide dans le canal (52).

3. Machine électrique d'entraînement (12) selon la revendication 1 ou 2, dans laquelle le canal de recirculation (62) comprend une pluralité de fentes annulaires ou une pluralité d'alésages disposés de manière concentrique.

4. Machine électrique d'entraînement (12) selon l'une des revendications précédentes, dans laquelle ladite au moins une sortie (64) est agencée de manière à faire face à un côté dépression des dents de stator (42).

5. Machine électrique d'entraînement (12) selon l'une des revendications précédentes, dans laquelle l'au moins une sortie (64) est située, par rapport à une direction principale d'écoulement (68) du fluide dans le canal (52), directement en amont des dents du stator (42) ou au niveau d'une extrémité amont des dents du stator (42).

6. Machine électrique d'entraînement (12) selon l'une des revendications précédentes, comprenant en outre une pluralité de sorties (64), les sorties (64) étant disposées de telle sorte que plus de la moitié d'un flux massique du fluide s'écoulant à travers le canal de recirculation (62) peut être alimentée du côté dépression des dents de stator (42).

7. Machine électrique d'entraînement (12) selon la revendication précédente, dans laquelle la majorité des sorties (64) sont en face du côté dépression des dents de stator (42), ou les sorties (64) qui font face au côté dépression des dents de stator (42) ont une surface de section transversale plus grande que les autres sorties (64), ou les sorties (64) qui font face au côté dépression des dents de stator (42) ont une somme de surfaces de section transversale plus grande que les autres sorties (64) .

8. Machine électrique d'entraînement (12) selon l'une des revendications précédentes, dans laquelle le canal (52) constitue le seul trajet d'écoulement du fluide à travers la machine d'entraînement (12).

9. Machine électrique d'entraînement (12) selon l'une des revendications précédentes, dans laquelle l'angle d'attaque prédéterminé (α) a une valeur comprise entre 5° et 15°.

10. Compresseur (14) et/ou turbine (16), notamment turbocompresseur à gaz d'échappement (10), comprenant un boîtier (24), un arbre (20) monté rotatif dans le boîtier (24) et sur lequel au moins une roue de compresseur (18) ou une roue de turbine (20) est montée solidaire en rotation, et comprenant une machine électrique d'entraînement (12) selon l'une des revendications précédentes, l'arbre de rotor (30) étant fixé à l'arbre (20) du compresseur (14), la roue de compresseur (18) présentant plusieurs aubes principales, un nombre d'aubes principales de la roue de compresseur (18) étant de préférence opposé à un nombre inégal de dents de stator (42) et un canal de recirculation (62) étant de préférence prévu entre chaque dent de stator (42).
